# EUROPEAN PATENT SPECIFICATION

(11) **EP 1 772 639 B1**
(45) Date of publication and mention of the grant of the patent: **23.02.2011**
(21) Application number: 06120832.8
(22) Date of filing: 18.09.2006
(51) Int. Cl.: F16C 13/02, B22D 11/128, B21B 31/07

(54) **Pressure compensating device for a roll bearing**
Druckausgleichseinrichtung für ein Walzenlager
Dispositif de compensation de pression pour un palier de laminoir

(30) Priority: 07.10.2005 SE 0502208
(43) Date of publication of application: 11.04.2007
(73) Proprietor: Aktiebolaget SKF, 415 50 Göteborg (SE)
(72) Inventor: Pettersson, Björn, S-434 94, VALLDA (SE)

(56) References cited:
- SE-C2- 526 177
- US-A- 2 676 073
- US-A- 4 039 229
- US-A- 4 351 383
- US-A- 5 402 858

## Description

The present invention refers to a pressure compensating device for a roller, particularly a top roller for a roller bed of a continuous casting machine.

The rollers in such a roller bed operate in an adverse environment with high temperature, water, oxide scales and steam, which is generated when the water is used for cooling the hot casting strands, which are shaped, transported and cooled on the roller bed, where every roller is subdivided in several roller segments. This puts
very high demands on the sealing arrangements for the bearings in which these roller segments are supported on the shaft common for all or several roller segments. A further complication is the temperature variations to which the rollers are subjected. The volume of air trapped in the gap between a roller segment having a length of about 60 cm and the intermediate sleeve, which is disposed between the shaft and the roller segment can amount to about half a litre, and the increase in volume this air will get when heated by the hot casting strands would mean a strong pressure influence on the bearing seals, if there were no compensation devices, which could take up such volume increases.

It has earlier been proposed to build in bellows-formed compensating devices in or in the vicinity of the bearing housings. Such a solution is presented in SE 526 177 C2. At top rollers of a roller bed, it is however very difficult to use such a solution for space reasons.

US-A-4,351,383 refers to a roller incorporating a central, non-rotating shaft having spaced apart bearings adjacent opposite axial ends of the shaft and rotatably supporting at least one tubular roller segment and with sealing arrangements positioned outside said bearings for sealing off the space inside the bearings and between shaft and roller segment towards the environment, and which shaft has a longitudinal bore extending from one end of the shaft and through at least a part thereof. This bore is intended for supply of lubricant to the interior of the roller and communicating with the space between the sealing arrangements via channels, and it is provided with a detachable screw type closure preventing communication between the exterior and the space between the sealing arrangements.

With such a roller there can not be any pressure compensation within the roller at increase of the roller temperature, which means that increased pressure can cause the sealing arrangements to leak, causing lubricant to reach the outside of the axial roller ends.

US-A-5,402,858 discloses a rock bit having bearings sealed off against the environment with O-ring seals and a body with a ball passage communicating with a grease reservoir in which is positioned a pressure compensating subassembly comprising a metal cup with an, opening closed by a flexible bellows.

US-A-2,676,073 discloses a breather for a housing for a sealed axle box bearing, where the housing at one axial end has a flexible sealing member, and where the opposite axial end is closed by a cap having a breather opening. In the cap between the space inside the housing and the breather opening is positioned a circular diaphragm arranged to close off the interior of the axle box for preventing external contaminants from entering and grease from escaping at the same time as the flexible sealing member at the axial end opposite to the cap is not subjected to pressure variations, which could damage the flexible sealing member or at least its function.

The purpose of the present invention is to propose a solution suited also for such an application, and this has been achieved at a pressure compensating device according to claim 1.

Hereinafter, the invention will be further disclosed with reference to a non-limiting embodiment illustrated in the accompanying drawing.

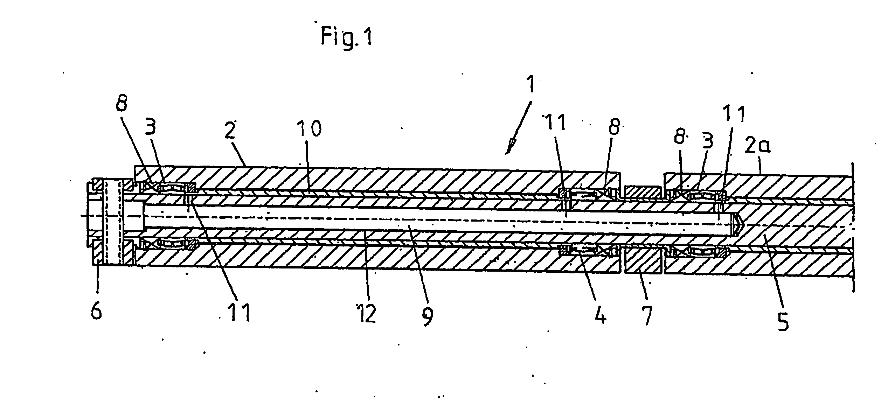

The single drawing figure - Fig. 1 - shows in cross section a portion of a roller of a roller bed for a continuous casting machine, with one roller segment and part of an adjoining roller segment.

The figure shows a roller 1 incorporating a number of roller segments 2, 2a, rotatably supported in bearings 3, 4 on a common shaft 5, which is non-rotatably supported in stands 6, 7. In the figure is shown one complete roller segment 2 and a portion of a second roller segment 2a. Near each end of the roller segment 2, 2a is positioned a bearing 3, 4 and outside each bearing is arranged a sealing cassette 8.

As stated above these sealing cassettes 8 are subjected to varying pressures under influence from the hot casting strands or slabs transported on the roller bed, and in order to secure that the sealing members incorporated in the sealing cassettes are not pulled inwards or pressed outwards under influence of the temperature variations and thereby could cause moisture and contaminants to enter the bearings situated inside the sealing cassettes, there is provided a pressure compensating device, which in the embodiment illustrated is common for bearings 3, 4, 3 in three different positions. Each compensating device could however be used for one or more bearing positions.

Around the shaft 5 and inside each roller.segment 2, 2a, there is provided an intermediate sleeve 10, which is in contact with the shaft 5 but is spaced with a narrow clearance from the roller segment. This intermediate sleeve 10 is contacting and spacing apart the inner rings of the two bearings in each roller segment.

The non-rotating shaft 5, is provided with a bore 9, which is concentric with the outer envelope surface of the shaft, and extends through a part of the shaft. In the embodiment illustrated this bore 9 extends over the entire length of the first roller segment 2 and over a part of the second roller segment 2a, thus that it ends at a position inside the sealing cassette 8 situated outside the first bearing 3 in the second roller segment 2a.

This bore 9 communicates via a number of radial channels 11 with the chambers where the bearings 3, 4 are situated, thus that the bore 9 via said channels 11 is in contact with the space between the two sealing cassettes 8 and thereby also with the narrow clearance between the intermediate sleeve and the inner envelope surface of the roller segment 2, 2a.

When air entrapped in this space is heated as a result of the contact between the exterior of the roller segment and the hot casting strands or slabs transported on the roller bed, the volume of this air will increase. Due to the possibility to communicate via the channels 11 and the bore 9, this increase in volume will not result in a steep increase in the pressure acting on the sealing cassettes 8, and the risk for forces acting to urge the sealing members to open is thereby eliminated.

For avoiding the risk that moisture and contaminants can reach the interior of the bearing chambers via the bore 9 in the shaft 5 and the radial channels 11, the bore 9 is provided with a flexible member 12, preventing moisture and foreign matter from reaching the interior of the roller segments.

This flexible member 12, can be a membrane positioned near the opening of the bore 9, or as illustrated a flexible hose which has a closed end portion positioned adjacent the inner end of the bore 9, whereas its opposite end is open and attached to the entrance of the bore 9 in order to allow the hose to communicate with the ambient air. The membrane or hose 12 can be made of rubber or an appropriate plastic material.

Although not illustrated, there can if desired be positioned a restriction at the open end of the hose 12.

In the drawing the bearings illustrated have been shown as a self-aligning spherical roller bearing 3 and a toroidal roller bearing 4, but the type of bearings are not crucial for the pressure compensating device according to the invention.

As the illustrated and described pressure compensating device is arranged inside the shaft 5 on which the roller segments are supported, there are no problems in housing the device also in arrangements having limited space, and for this reason the described solution is particularly suited for use in the top roller segments of a roller bed for a continuous casting machine, but it can of course also be used in other types of rollers or roller segments.

The invention is not limited to the embodiment shown in the accompanying drawing and described in connection thereto, but modifications and variants are possible within the scope of the accompanying claims. Although the concentric bore 9 in the shaft has been shown to extend along three bearing positions, this is not critical and the bore may for instance extend over more or less than three bearing positions.

As an alternative to the solution illustrated with a bore extending through a part of the shaft and having a hose or flexible member, which is closed at one end and has its opposite end open and communicating with the outer atmosphere, it is also possible to use a tubular shaft, being open at both ends and being provided with a flexible member being open at both ends and being sealingly attached to the inner surface of the bore, thus that the interior of the hose communicates with the atmosphere at both ends whereas the exterior surface thereof is subjected to pressure variations in the space between the sealing arrangements.

## Claims

1. A pressure compensating device for a roller, which roller incorporates bearings (3, 4) and where sealing arrangements (8) are provided outside said bearings (3, 4) for sealing off the space inside the bearings towards the environment,
wherein the pressure compensating device incorporates a member (12) preventing direct contact between the exterior and the space between the sealing arrangements, which member (12) is flexible and arranged to perform movements in order to compensate for pressure variations in the space between the sealing arrangements (8),
**characterized in that**
the roller (1) incorporates a central non-rotating shaft (5), wherein said bearings (3, 4) are spaced apart and positioned adjacent opposite axials ends of the shaft and rotatably supporting at least one tubular roller segment (2, 2a), where the sealing arrangements (8) are sealing off the space between the shaft (5) and the roller segment (2, 2a), which pressure compensating device incorporates a longitudinal bore (9) extending from one end of the shaft (5) and through at least a part thereof and communicating with the space between the sealing arrangements (8) via channels (11), and that the flexible member (12) is attached to the wall of the bore adjacent the opening at least at one end of the bore and being inserted in at least a part of the bore.

2. A pressure compensating device as claimed in claim 1,
**characterized therein,**
that the longitudinal bore (9) is arranged to extend through the entire shaft (5), and that the ends of the flexible member (12) are sealingly attached to the interior surface of the bore, adjacent both ends of the bore.

3. A pressure compensating device as claimed in claim 1 or 2,
**characterized therein,**
that the flexible member is a membrane positioned in the bore (9) near the opening thereof.

4. A pressure compensating device as claimed in claim 1,
**characterized therein,**
that the flexible member (12) is a flexible hose having a closed inner end and an open outer end, which is fitted to the wall of the bore (9) adjacent the opening thereof.

5. A pressure compensating device as claimed in anyone of the preceding claims,
**characterized therein,**
that the longitudinal bore (9) is concentric with the shaft (5).

## Patentansprüche

1. Druckausgleichsvorrichtung für eine Walze, wobei die Walze Lager (3, 4) enthält und wobei Dichtungsanordnungen (8) außerhalb der Lager (3, 4) zur Abdichtung des Raums innerhalb der Lager gegen die Umgebung vorgesehen sind, wobei die Druckausgleichsvorrichtung ein Glied (12) enthält, das direkten Kontakt zwischen dem Außenbereich und dem Raum zwischen den Dichtungsanordnungen verhindert, wobei das Glied (12) flexibel ist und dazu angeordnet ist, Bewegungen durchzuführen, um Druckschwankungen in dem Raum zwischen den Dichtungsanordnungen (8) auszugleichen,
**dadurch gekennzeichnet, dass**
die Walze (1) eine mittlere nicht drehende Welle (5) enthält, wobei die Lager (3, 4) voneinander beabstandet und neben einander gegenüberliegenden axialen Enden der Welle positioniert sind und mindestens ein röhrenförmiges Walzensegment (2, 2a) drehbar stützen, wobei die Dichtungsanordnungen (8) den Raum zwischen der Welle (5) und dem Walzensegment (2, 2a) abdichten, wobei die Druckausgleichsvorrichtung eine Längsbohrung (9) enthält, die von einem Ende der Welle (5) und durch mindestens einen Teil davon verläuft und über Kanäle (1) mit dem Raum zwischen den Dichtungsanordnungen (8) in Verbindung steht, und dass das flexible Glied (12) mindestens an einem Ende der Bohrung an der Wand der Bohrung neben der Öffnung befestigt ist und in mindestens einen Teil der Bohrung eingeführt ist.

2. Druckausgleichsvorrichtung nach Anspruch 1,
**dadurch gekennzeichnet, dass**
die Längsbohrung (9) so angeordnet ist, dass sie durch die gesamte Welle (5) verläuft, und dass die Enden des flexiblen Glieds (12) neben beiden Enden der Borungen abdichtend an der Innenfläche der Bohrung befestigt sind.

3. Druckausgleichsvorrichtung nach Anspruch 1 oder 2,
**dadurch gekennzeichnet, dass**
das flexible Glied eine Membran ist, die in der Bohrung (9) in der Nähe der Öffnung davon positioniert ist.

4. Druckausgleichsvorrichtung nach Anspruch 1,
**dadurch gekennzeichnet, dass**
das flexible Glied (12) ein flexibler Schlauch ist, der ein geschlossenes innere Ende und ein offenes äußeres Ende aufweist, das an der Wand der Bohrung (9) neben dessen Ende angebracht ist.

5. Druckausgleichsvorrichtung nach einem der vorhergehenden Ansprüche,
**dadurch gekennzeichnet, dass**
die Längsbohrung (9) konzentrisch zur Welle (5) verläuft.

## Revendications

1. Dispositif de compensation de la pression pour un rouleau, lequel rouleau comporte des paliers (3, 4) et dans lequel des agencements d'étanchéité (8) sont prévus en dehors desdits paliers (3, 4) pour sceller l'espace à l'intérieur des paliers par rapport à l'environnement, le dispositif de compensation de la pression comportant un organe (12) empêchant un contact direct entre l'extérieur et l'espace entre les agencements d'étanchéité, lequel organe (12) est flexible et agencé de manière à effectuer des mouvements afin de compenser les variations de pression dans l'espace entre les agencements d'étanchéité (8),
**caractérisé en ce que**
le rouleau (1) comporte un arbre central non rotatif (5), lesdits paliers (3, 4) étant espacés et positionnés à côté d'extrémités axiales opposées de l'arbre et supportant à rotation au moins un segment de rouleau tubulaire (2, 2a), les agencements d'étanchéité (8) scellant l'espace entre l'arbre (5) et le segment de rouleau (2, 2a), lequel dispositif de compensation de pression comporte un alésage longitudinal (9) s'étendant depuis une extrémité de l'arbre (5) et à travers au moins une partie de celui-ci et communiquant avec l'espace entre les agencements d'étanchéité (8) par le biais de canaux (11), et **en ce que** l'organe flexible (12) est attaché à la paroi de l'alésage adjacente à l'ouverture à au moins une extrémité de l'alésage et est inséré dans au moins une partie de l'alésage.

2. Dispositif de compensation de la pression selon la revendication 1,
**caractérisé en ce que** l'alésage longitudinal (9) est prévu pour s'étendre à travers l'ensemble de l'arbre (5) et **en ce que** les extrémités de l'organe flexible (12) sont attachées de manière hermétique à la surface intérieure de l'alésage, à côté des deux extrémités de l'alésage.

3. Dispositif de compensation de la pression selon la revendication 1 ou 2,
**caractérisé en ce que** l'organe flexible est une membrane positionnée dans l'alésage (9) près de l'ouverture de celui-ci.

4. Dispositif de compensation de la pression selon la revendication 1,
**caractérisé en ce que** l'organe flexible (12) est un tuyau flexible ayant une extrémité interne fermée et une extrémité externe ouverte, qui est fixé à la paroi de l'alésage (9) à côté de l'ouverture de celui-ci.

5. Dispositif de compensation de la pression selon l'une quelconque des revendications précédentes,
**caractérisé en ce que** l'alésage longitudinal (9) est concentrique à l'arbre (5).
